# FASCICULE DE BREVET EUROPEEN

(11) **EP 3 722 989 B1**
(45) Date de publication et mention de la délivrance du brevet: **05.11.2025**
(21) Numéro de dépôt: 20169210.0
(22) Date de dépôt: 10.04.2020
(51) Int. Cl.: G06K 7/10, A47F 3/00, G06Q 10/08

(54) **PROCÉDÉ DE GESTION DU CONTENU D'UNE VITRINE DE PRÉSENTATION DE PRODUITS ÉQUIPÉS D'ÉTIQUETTES RFID**
STEUERUNGSVERFAHREN DES INHALTS EINER PRÄSENTATIONSVITRINE MIT PRODUKTEN, DIE MIT RFID-ETIKETTEN AUSGESTATTET SIND
METHOD FOR MANAGING THE CONTENTS OF A DISPLAY CASE FOR PRESENTING PRODUCTS PROVIDED WITH RFID TAGS

(30) Priorité: 12.04.2019 FR 1903935
(43) Date de publication de la demande: 14.10.2020
(73) Titulaire: La Boite à Encas, 92110 Clichy (FR)
(72) Inventeur: TSNOBILADZE, Paul, 75015 Paris (FR)
(74) Mandataire: Cabinet Beau de Loménie

(56) Documents cités:
- CN-A- 107 798 774
- CN-U- 204 965 590
- US-A1- 2014 084 060
- US-A1- 2014 184 391
- US-A1- 2018 336 380

## Description

### Domaine Technique

L'invention se rapporte au domaine général des vitrines de présentation de produits. Plus précisément, l'invention concerne les vitrines équipées d'antennes pour détecter des étiquettes RFID équipant des produits placés dans les vitrines.

L'invention trouve notamment application dans les vitrines de présentation de produits alimentaires.

### Technique antérieure

La technologie désignée sous l'acronyme anglo-saxon RFID (« Radio Frequency Identification ») permet de détecter automatiquement des étiquettes, généralement appelées « tags » par l'homme du métier.

Cette technologie utilise traditionnellement des ondes située dans une bande appelée ultra haute fréquence (c'est-à-dire des fréquences supérieures à 100 mégahertz environ et inférieures à quelques gigahertz), pour permettre des détections d'étiquettes à des distances de l'ordre du mètre. On peut donc utiliser cette technologie pour détecter quels produits sont présents dans une vitrine, par exemple au moyen d'une ou de plusieurs antennes disposées dans la vitrine. On peut ainsi mettre en œuvre des inventaires des produits présents dans la vitrine.

Comme on le conçoit, si la vitrine est munie d'une porte en verre, un objet sorti de la vitrine mais placé à proximité de la porte en verre peut être détecté comme étant présent dans la vitrine alors que tel n'est pas le cas. Des détections de faux-positifs sont donc fréquentes dans ces systèmes.

Pour pallier cet inconvénient, il a été proposé d'appliquer sur les portes en verre des films transparents comprenant des grillages conducteurs transparents. De tels films limitent la propagation des ondes émises par les étiquettes RFID.

Le document FR 2964217 décrit l'utilisation de tels films sur une vitrine de produits alimentaires.

Il a été observé par les inventeurs de la présente invention que ces films ne limitent pas suffisamment la propagation des ondes émises par les étiquettes RFID.

En effet, si un utilisateur retire un produit et reste devant la porte de la vitrine, le produit peut toujours être détecté.

Le document antérieur US 2006/022827 décrit également une vitrine de ce type utilisant des parois qui filtrent les signaux. La solution de ce document n'est pas non plus satisfaisante. De l'art antérieur, on connait également les documents CN 204 965 590 et US 2014/184391.

L'invention vise notamment à pallier ces inconvénients.

### Exposé de l'invention

A cet effet, l'invention propose un procédé selon la revendication 1.

A titre indicatif, une détection des produits présents dans l'enceinte peut comprendre une détection non-désirée de produits situés à l'extérieur de l'enceinte.

Les inventeurs de la présente invention ont observé que pour empêcher la détection d'un produit sorti d'une vitrine, on peut suivre la valeur d'une caractéristique de la détection de l'étiquette du produit détecté entre la première détection et la deuxième détection : ces deux valeurs peuvent refléter un déplacement du produit en dehors de la vitrine. En utilisant des paramètres prédéfinis (par exemple au cours d'une étape de calibration ou au cours d'une étape d'apprentissage), on peut alors mettre en œuvre un traitement pour vérifier si le produit a été sorti ou non.

On peut noter que c'est l'utilisation de ces paramètres prédéfinis qui permet d'améliorer encore plus la détermination de la sortie ou non d'un produit.

On peut en outre noter que ce procédé peut être mis en œuvre par un module de gestion du contenu de la vitrine, comprenant par exemple un système informatique. Ce système informatique peut comprendre un processeur, de la mémoire volatile, et de la mémoire non-volatile (dans laquelle ledit au moins un paramètre prédéfini est enregistré). De manière alternative, le procédé peut être mis en œuvre par un serveur distant de la vitrine comprenant lui aussi un système informatique, le serveur et la vitrine étant en communication au moyen d'un réseau tel que l'Internet.

A titre indicatif, la première détection est mise en œuvre avant qu'une porte de la vitrine ne soit ouverte.

Aussi, le procédé peut comporter l'élaboration d'un inventaire des produits restés dans la vitrine après la deuxième détection.

Le seuil de détection prédéfini est ledit paramètre prédéfini. Il a été observé par les inventeurs que la sortie d'un produit pouvait entrainer des écarts de valeur de la caractéristique qui sont bien représentatifs de la sortie d'un produit.

A titre indicatif, si la caractéristique de la détection est représentative d'une puissance d'un signal reçu par l'antenne et émis par une étiquette (mieux connu sous l'acronyme anglo-saxon « RSSI : Received Signal Strength Indication »), alors la sortie d'un produit peut entrainer une baisse significative de cette puissance, et cette baisse généralement stable : cela permet de définir un seuil qui, lorsqu'il est dépassé, illustre une sortie d'un produit.

L'utilisation d'un réseau de neurones permet d'obtenir une détermination encore plus précise, car elle autorise la mise en œuvre d'un apprentissage.

En effet, l'apprentissage et la modification du réseau de neurones artificiels peut être mis en œuvre en recevant des commandes de l'utilisateur indiquant si une liste de produits sortis et corrects, ou encore en recevant des commande de l'utilisateur indiquant si un inventaire établi par la vitrine est correct.

L'utilisation d'un réseau de neurones artificiels permet également d'adapter, au moyen de l'apprentissage, le fonctionnement de chaque vitrine (ce qui est avantageux si une flotte de vitrines est déployée).

En outre, ce réseau de neurones artificiels peut recevoir davantage d'entrées, et en particulier : le nombre de produits détectés comme présents dans la vitrine, les caractéristiques des produits et de leurs emballages (poids, volume, part d'eau ou de graisse, etc), ou encore des données d'historique (typiquement des valeurs des caractéristique de la détection obtenues par différentes antennes au cours de différentes détections, ou encore des données d'historiques d'achat de l'utilisateur).

Le film filtrant les ondes électriques et/ou magnétiques peut être un filtre appelé « filtre anti-ondes » par l'homme du métier. Ce filtre peut être translucide ou transparent. A titre indicatif, on pourra utiliser un filtre commercialisé par la société allemande YSHIELD sous la référence RDF 72, qui atténue les radiations hautes fréquence de 30 décibels (à 1 gigahertz) et qui a une transmission lumineuse de 72%.

Selon un mode de mise en œuvre particulier, le procédé comprend une étape d'ajustement du seuil.

Ce mode particulier de mise en œuvre peut être particulièrement avantageux s'il est observé que des erreurs se produisent dans la détermination de la sortie, ou non, d'un produit.

Par exemple, cet ajustement du seuil peut être mis en œuvre automatiquement.

A titre indicatif, l'ajustement automatique du seuil peut être réalisé sur la base d'une détection d'erreur par l'utilisateur. A titre indicatif, la détection d'une erreur par l'utilisateur peut comporter :
- un affichage, sur une interface humain-machine de la vitrine, d'une liste de produits considérés comme ayant été sortis de la vitrine,
- une réception d'une commande de l'utilisateur indiquant si la liste est correcte (par exemple si un produit manque dans la liste ou si un produit est dans la liste sans avoir été sorti),
- à partir de la commande de l'utilisateur, une modification du seuil (par exemple une augmentation ou une diminution du seuil d'un montant prédéfini).

De manière alternative, un utilisateur peut réaliser manuellement un inventaire et le procédé comporte alors uniquement la réception d'une commande indiquant si un inventaire réalisé par la vitrine est correct. Le seuil peut alors également être modifié (par exemple automatiquement avec une augmentation ou une diminution du seuil d'une quantité prédéfinie).

Selon encore une autre alternative, la valeur du seuil peut être fixée par un réseau de neurones artificiels, recevant en entrée, par exemple, les caractéristiques de détection des étiquettes avant la première détection et après la deuxième détection (par exemple le RSSI d'un signal émis par une étiquette, un identifiant d'antenne, une valeur de phase, une valeur de décalage Doppler), ainsi qu'une liste des produits ayant été considérés comme sortis. Ce réseau de neurones artificiels délivre en sortie une valeur de seuil à utiliser. Pour l'apprentissage de ce réseau de neurone, on peut utiliser des informations telles que des résultats d'inventaires faits manuellement, ou encore les informations des commandes d'utilisateurs indiquant si un inventaire réalisé par la vitrine est correct.

Selon un mode de mise en œuvre particulier, au moins deux types de produits sont placés dans ladite enceinte, et pour chaque type de produit on utilise un seuil différent.

A titre indicatif, les produits d'un premier type peuvent avoir des dimensions inférieures à celles des produits d'un deuxième type. Plus que deux types de produits peuvent être utilisés, et on peut adapter les valeurs des seuils lors de phases de calibration ou d'apprentissage.

Selon un mode de mise en œuvre particulier, l'interface entre la porte et l'intérieur de la vitrine est équipée d'un joint filtrant les ondes électriques et/ou magnétiques, le joint étant connecté (électriquement) à la masse électrique de la vitrine.

Les inventeurs de la présente invention ont observé qu'une étiquette peut toujours être détectée si le produit est sorti et est présent dans une zone proche de cette interface (où les bords de la porte reposent contre une surface de la vitrine, là où le joint est agencé). Un joint filtrant peut comporter du métal qui empêchera la propagation des ondes. En reliant ce joint à la masse de la vitrine, on obtient en outre une cage de Faraday.

On pourra utiliser un joint comprenant une mousse entourée par un tissage métallique. La société française JACQUES DUBOIS commercialise de tels joints sous la dénomination TISCAT.

Selon un mode particulier de mise en œuvre, la vitrine est équipée d'une pluralité d'antennes configurées pour détecter les étiquettes RFID des produits présents dans ladite enceinte, la première détection et la deuxième détection comprenant :
- une détection, par chaque antenne de la pluralité d'antennes, des produits présents dans ladite enceinte,
- pour chaque produit détecté par plusieurs antennes de la pluralité d'antennes, on détermine une valeur de la caractéristique à conserver à partir de toutes les valeurs de la caractéristique obtenue pour le produit en appliquant un traitement prédéfini,
- une élaboration d'une liste de produits détectés avec pour chaque produit détecté une valeur de la caractéristique à conserver ou, si le produit a été détecté par une unique antenne, la valeur de la caractéristique obtenue pour ce produit.

En utilisant une pluralité d'antennes, on facilite la détection de produits placés à différents emplacements de la vitrine. Dans les solutions selon l'art antérieur, la détection par au moins une antenne suffisait pour qu'une étiquette ou un produit soit considéré comme présent dans la vitrine. Ce n'est pas le cas ici, où si un produit est détecté par une antenne, on va en plus déterminer une valeur de la caractéristique à conserver (typiquement la valeur la plus élevée obtenue par l'une des antennes).

La détermination de la valeur de la caractéristique à conserver peut comporter une sélection de la valeur qui montre que le produit a le plus de chance de ne pas avoir été sorti (par exemple la plus élevée si l'on utilise le RSSI). De manière alternative, on peut déterminer une moyenne des valeurs pour chaque antenne ayant détecté le produit.

Selon un mode de mise en œuvre particulier, les antennes sont agencées à l'intérieur d'évidements formés dans des étagères de la vitrine.

Ces évidements permettent de masquer les antennes qui sont ainsi placées entre deux couches du matériau formant l'étagère.

Il a été observé que le contact avec le matériau formant l'étagère affecte et décale la gamme de fréquences de fonctionnement des antennes. Préférentiellement, on accorde les antennes de sorte que la gamme de fréquences de fonctionnement voulue (par exemple correspondant aux étiquettes) soit obtenue après le contact avec le matériau formant l'étagère.

Par exemple, on peut accorder les antennes pour que la gamme 865-868 Mhz soit atteinte à -10dB après le contact avec le matériau de l'étagère (par exemple du PVC. Accorder les antennes peut comprendre réaliser des gravures. On notera qu'un accord de -10dB est considéré comme suffisant pour que l'antenne transforme 90% de l'énergie conduite en énergie rayonnée.

Les antennes peuvent avoir une forme substantiellement rectangulaire (ce qui permet de limiter les pertes de matière lors de la fabrication des antennes).

Selon un mode de mise en œuvre particulier, on élabore ladite liste de produits détectés avec un identifiant de l'antenne ayant obtenue la valeur de la caractéristique à conserver.

Ce mode de mise en œuvre particulier peut être utilisé lorsque l'on a sélectionné la valeur de la caractéristique à conserver parmi celles de chaque détection.

L'identifiant de l'antenne peut notamment permettre de connaître la position du produit dans la vitrine. Si les produits sont destinés à rester en des emplacements prédéfinis de la vitrine, la détection d'un changement d'antenne (associée à la valeur de la caractéristique à conserver) peut être un évènement à traiter (ce qui peut conduire à une génération d'un message d'alerte, etc).

Selon un mode de mise en œuvre particulier, la ou les antennes sont utilisées dans un mode de recherche double cible.

Ce mode de recherche ou « Search Mode » en anglais est plus souvent désigné sous le nom anglais de « dual target ». Ce mode de recherche vise une recherche dans laquelle les étiquettes rentrent dans l'inventaire que leur drapeau soit dans un état A ou dans un état B (par exemple les deux états possible pour un drapeau d'étiquette), comme défini notamment dans la norme EPCglobal Gen2 dans sa version 2.0 et en particulier dans la partie 6.3.2.12.1.

On notera également que les lecteurs RFID de la société américaine Impinj compatibles avec cette norme EPCglobal Gen2 peuvent utiliser ce mode de recherche « dual target ».

Il a été observé par les inventeurs que le mode de recherche « dual target » est particulièrement bien adapté à la détection des produits dans une vitrine au moyen de plusieurs antennes : ce mode n'empêche pas la détection ultérieure (à bref délai) d'une étiquette par une autre antenne. Cela permet de s'assurer que l'on utilisera bien toutes les antennes d'une manière qui permettra d'obtenir les meilleures valeurs de caractéristiques de détection.

Selon un mode de mise en œuvre particulier, la caractéristique de la détection de l'étiquette d'un produit détecté est choisie dans le groupe comprenant : le RSSI d'un signal émis par l'étiquette, une différence de phase du signal émis par l'étiquette, une variation de fréquence du signal émis par l'étiquette, et un nombre de détections par antenne ayant détecté le produit. En variante, plusieurs caractéristiques de la détection sont utilisées et ces plusieurs caractéristiques peuvent être choisies dans ce groupe.

En ce qui concerne le nombre de détections par antenne ayant détecté le produit, ce mode de mise en œuvre est particulièrement intéressant pour des vitrines équipées de plusieurs antennes. Pour ces vitrines, les antennes peuvent être utilisées successivement jusqu'à avoir détecté (par exemple) deux fois chaque étiquette. Dès lors, pour un nombre N d'antennes, on peut avoir 2N détections d'une étiquette. Le nombre de détection, compris alors entre 1 et 2N, représente la probabilité qu'à un produit d'être présent ou sorti. Aussi, si une unique antenne est utilisée, on a zéro, une, ou deux détections par l'unique antenne.

Selon un mode de mise en œuvre particulier, la première détection est mise en œuvre postérieurement à une authentification d'un utilisateur avec la vitrine et préalablement à une ouverture de la vitrine, et la deuxième détection est mise en œuvre postérieurement à la première fermeture de la vitrine qui suit ladite ouverture de la vitrine.

Ce mode de mise en œuvre particulier permet de s'assurer que c'est bien l'utilisateur qui s'est authentifié qui a manipulé et éventuellement retiré des produits entre les deux détections. Dès lors, si un système de paiement associé à des comptes utilisateurs est utilisé, on peut débiter le compte de l'utilisateur d'un montant correct et qui correspond aux produits effectivement sortis.

Selon un mode de mise en œuvre particulier, l'utilisateur peut s'authentifier au moyen d'un dispositif électronique sans-fil.

En particulier, l'utilisateur pourra utiliser un dispositif électronique sans-fil de type badge de communication en champ proche (« NFC : Near Field Communication), ou encore un téléphone de type smartphone équipé d'une fonction NFC.

Selon un mode de mise en œuvre particulier, on met en œuvre des détections supplémentaires des produits présents dans l'enceinte en utilisant ladite antenne pour détecter les étiquettes des produits de manière régulière, chaque détection supplémentaire comprenant en outre une obtention, pour chaque produit détecté, d'une valeur supplémentaire de la caractéristique de la détection de l'étiquette du produit détecté.

Par exemple, on peut mettre en œuvre des détections supplémentaires toutes les minutes.

Selon un mode de mise en œuvre particulier, si une détection supplémentaire a été mise en œuvre dans un délai inférieur à une durée prédéfinie, alors on considère que les produits détectés lors de cette détection supplémentaire sont les produits détectés lors de la première détection, et que pour chaque produit détecté lors de la détection supplémentaire, la valeur supplémentaire est la première valeur.

Par exemple, si on met en œuvre des détections supplémentaires toutes les minutes et si la durée prédéfinie est de 30 seconds, si un utilisateur s'authentifie 25 secondes après la dernière détection supplémentaire, alors la dernière détection supplémentaire est considérée comme la première détection.

Ce mode de mise en œuvre particulier permet d'accélérer le procédé lorsqu'un utilisateur a besoin de retirer un produit.

L'invention propose également une vitrine de présentation de produits éqselon la revendication 12.

Cette vitrine peut être configurée pour la mise en œuvre de tous les modes de mise en œuvre du procédé tel que défini ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 illustre de manière schématique une vitrine selon un exemple selon un exemple.
[Fig. 2] La figure 2 est un ordinogramme des étapes d'un procédé selon un exemple.
[Fig. 3] La figure 3 illustre les résultats des détections.
[Fig. 4] La figure 4 illustre des étapes d'un traitement utilisant un seuil.
[Fig. 5] La figure 5 illustre l'utilisation d'un réseau de neurones artificiels.
[Fig. 6] La figure 6 illustre la réception d'un retour de l'utilisateur.

### Description des modes de réalisation

On va maintenant décrire une vitrine et un procédé de gestion du contenu de cette vitrine selon des exemples de modes de mise en œuvre et de réalisation de l'invention.

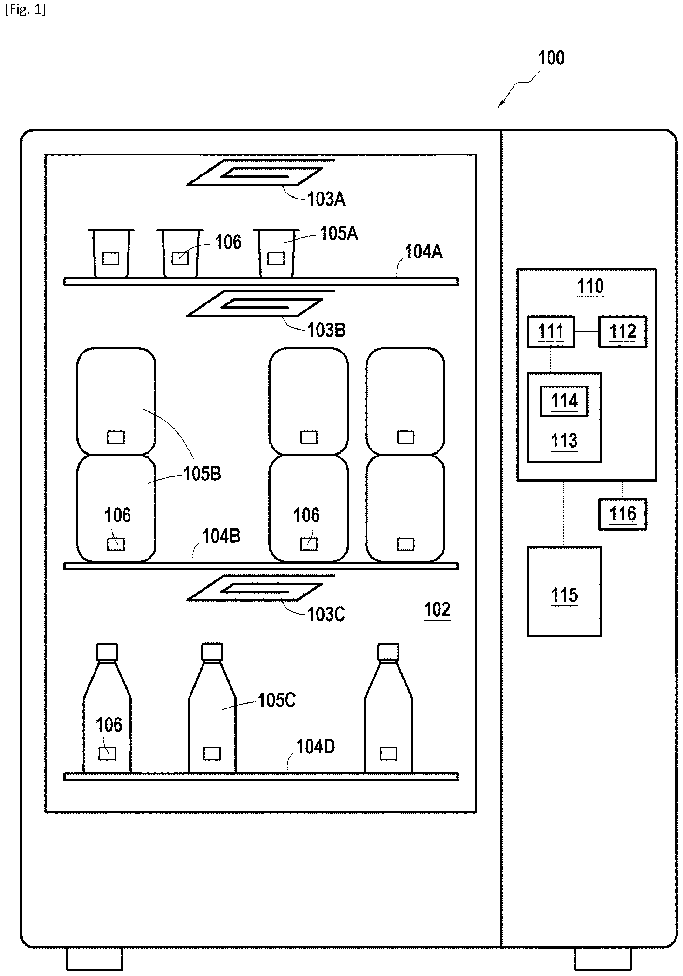

Sur la figure 1, on a représenté une vitrine 100 destinée à recevoir des produits alimentaires dans une enceinte. La vitrine 100 peut être du type réfrigérée et elle peut être installée, à titre indicatif, dans une salle de restauration de type cantine, cafétéria, ou restaurant. Dans les environnements de ce type, il peut être nécessaire de suivre précisément le contenu de la vitrine, en particulier si le retrait d'un produit entraine un paiement par l'utilisateur ayant retiré le produit.

A cet effet, l'invention propose d'utiliser la technologie RFID. Dans ce qui suit, on va décrire les éléments de la vitrine qui permettent d'utiliser la technologie RFID tout en autorisant la détection précise des produits contenus dans l'enceinte de la vitrine sans que les produits sortis mais proches de la vitrine ne soit détectés comme contenus.

On peut noter que de manière préférentielle, dans la présente description, la détection d'une étiquette RFID est mise en œuvre selon le mode appelé « dual target ».

Ici, la vitrine 100 comporte une porte 101 qui peut être ouverte pour retirer des produits placés dans une enceinte de la vitrine. La porte 101 est en verre, tandis que les autres portions de la vitrine 100 sont métalliques, ou au moins elles forment une cage de faraday qui empêche le passage des ondes magnétiques et/ou électriques.

On peut noter que la porte peut être verrouillée, par exemple au moyen d'une gâche électromécanique.

Pour limiter le passage de ces ondes à travers la vitrine, on utilise un filtre anti-ondes 102 appliqué sur la porte translucide ou transparente, ce filtre 102 étant préférentiellement au moins partiellement translucide ou transparent. A titre indicatif, on peut utiliser le filtre commercialisé par la société allemande YSHIELD sous la référence RDF 72, qui atténue les radiations hautes fréquence de 30 décibels (à 1 gigahertz) et qui a une transmission lumineuse de 72%.

Le filtre 102 filtre notamment les ondes émises ou qui pourraient être reçues par des antennes qui sont agencées à l'enceinte de la vitrine 100. Ici, ces trois antennes 103A, 103B, et 103C sont agencées de manière à être respectivement agencées au-dessus d'une étagère 104A, 104B, et 104C.

A titre indicatif, les antennes peuvent être des antennes telles que celles commercialisées par la société chinoise ECLE Communication Co., Ltd sous la référence DP866G12. Par exemple, on peut utiliser une antenne fonctionnant dans la bande de fréquences comprise entre 865 et 868 mégahertz pour des applications RFID.

D'autres agencements d'antenne sont possibles, et en particulier, il est possible d'utiliser davantage d'antennes.

Des produits 105A, 105B, et 105C ont respectivement été placés sur les étagères 104A, 104B, et 104C et tous ces produits sont équipés d'étiquettes RFID qui contiennent toutes un identifiant propre à chaque produit. Ces étiquettes RFID pourront donc recevoir des signaux des antennes 103A à 103C et émettre des signaux que ces antennes vont recevoir.

Comme on peut le voir sur la figure, les produits 105A sont assez peu volumineux (par rapport aux autres produits) et sont d'un premier type, les produits 105B ont une taille intermédiaire et sont d'un deuxième type, et les produits 105C sont les plus volumineux et sont d'un troisième type.

Comme on le conçoit, les produits des deuxième et troisième type 105B et 105C peuvent plus facilement former un obstacle pour les ondes entre les étiquettes 106 et les antennes 103A à 103C, on pourra tenir compte de ces différents types de produits dans la détection ultérieure.

Pour mettre en œuvre le procédé de gestion du contenu de la vitrine, on utilise un module de gestion du contenu de la vitrine 110, par exemple un système informatique.

Le module 110 comporte un processeur 111, une mémoire volatile 112, et une mémoire non-volatile 113. Dans la mémoire non-volatile 113, des instructions de programme d'ordinateur 114 sont enregistrées.

Ces instructions 114, lorsqu'elles sont exécutées par le processeur 111, provoquent l'exécution des étapes suivantes :

- une première détection des produits présents dans l'enceinte en utilisant les antennes 103A, à 103C, pour détecter les étiquettes des produits, la première détection comprenant en outre une obtention, pour chaque produit détecté, d'une première valeur d'une caractéristique de la détection de l'étiquette du produit détecté,
- postérieurement à la première détection, une deuxième détection des produits présents dans l'enceinte en utilisant les antennes 103A, à 103C pour détecter les étiquettes des produits, la deuxième détection comprenant en outre une obtention, pour chaque produit détecté, d'une deuxième valeur de la caractéristique de la détection de l'étiquette du produit détecté, et
- pour chaque produit détecté lors de la première détection et lors de la deuxième détection, un traitement de la première valeur et de la deuxième valeur de la caractéristique, le traitement utilisant un ou plusieurs paramètres prédéfinis pour déterminer si le produit a été sorti de ladite enceinte entre la première détection et la deuxième détection.

La vitrine 101 comporte ici en outre une interface humain-machine 115, par exemple un écran tactile sur lequel la vitrine peut afficher des listes de produits sortis, des inventaires, ou encore des boutons pour que l'utilisateur puisse indiquer si la liste de produits sortis est correcte ou si l'inventaire est correct.

En outre, pour pouvoir déverrouiller la porte 101 de la vitrine, un utilisateur peut s'authentifier sur un module d'authentification 116, ici un module d'authentification capable de communiquer avec des dispositifs d'authentification sans fil (typiquement des badges RFID, des cartes sans-contact, ou des téléphones). Cette authentification peut conduire à la mise en œuvre de la première détection, puis au déverrouillage de la gâche électromécanique. Enfin, l'authentification permet de débiter un compte associé à l'utilisateur d'un montant qui correspond aux produits sortis.

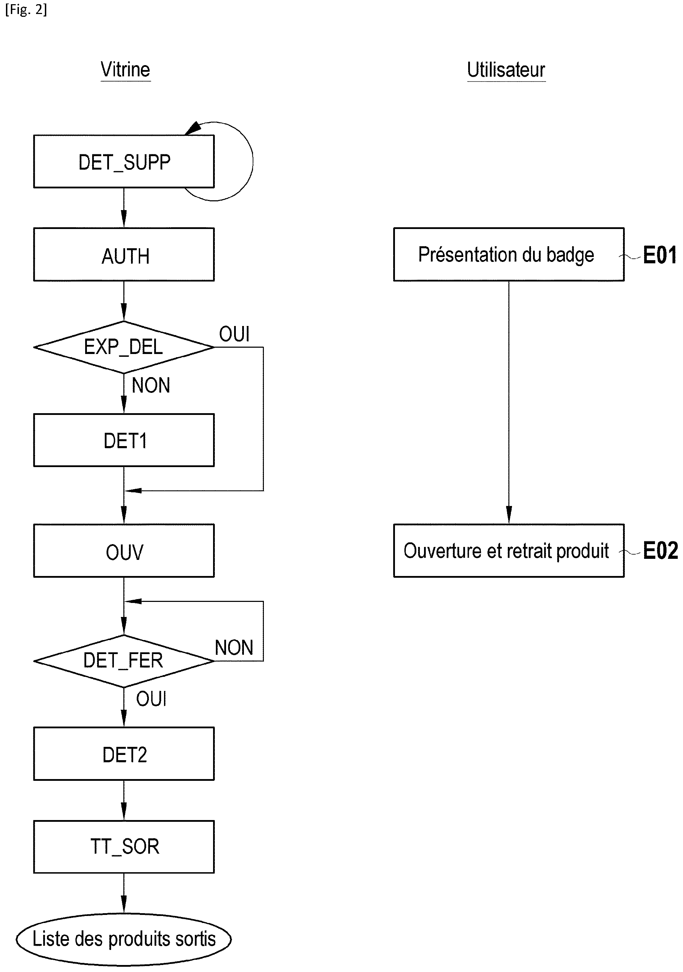

Sur la figure 2, on a représenté de manière plus détaillée les étapes d'un procédé selon un exemple. Ce procédé peut être mis en œuvre par la vitrine 100 décrite en référence à la figure 1. En particulier, les étapes qui suivent peuvent être implémentées sous la forme d'instruction de programme d'ordinateur.

Dans une première étape DET_SUPP, on met en œuvre une détection appelée détection supplémentaire des produits présents dans l'enceinte de la vitrine en utilisant la ou les antennes de la vitrine. L'étape DET_SUPP est mise en œuvre régulièrement, par exemple toutes les minutes, et elle permet d'obtenir pour chaque produit détecté une valeur supplémentaire d'une caractéristique de la détection de l'étiquette du produit détecté, par exemple une valeur RSSI d'un signal émis par l'étiquette.

L'étape DET_SUPP est mise en œuvre de manière continue, sauf si une authentification d'un utilisateur AUTH est mise en œuvre. A cette étape, l'utilisateur met en œuvre une étape E01 de présentation d'un badge qui lui est propre.

Ensuite, dans une étape EXP_DEL, on vérifie si une détection supplémentaire a été mise en œuvre dans un délai inférieur à une durée prédéfinie (typiquement 30 secondes). Si tel est le cas on considère que les produits détectés lors de cette détection supplémentaire sont les produits détectés lors d'une première détection, et que pour chaque produit détecté lors de la détection supplémentaire, la valeur supplémentaire est une première valeur.

Si le délai prédéfini a expiré depuis la dernière détection supplémentaire alors on met en œuvre l'étape DET1 dans laquelle on met en œuvre une première détection des produits présents dans l'enceinte en utilisant la ou les antennes de la vitrine, pour détecter les étiquettes des produits. La première détection comprend en outre une obtention, pour chaque produit détecté, d'une première valeur de la caractéristique de la détection de l'étiquette du produit détecté.

Ultérieurement, l'ouverture d'une porte de la vitrine est permise par un déverrouillage de la porte qui peut ensuite être ouverte dans l'étape OUV. L'utilisateur met en œuvre de son côté l'étape E02 dans laquelle il ouvre la porte (qui a été déverrouillée) et retire des produits.

L'étape DET_FER est ensuite mise en œuvre dans laquelle la vitrine vérifie si la porte a été refermée. Dès qu'elle est refermée, on met en œuvre l'étape DET2 dans laquelle on met en œuvre une deuxième détection des produits présents dans l'enceinte en utilisant la ou les antennes de la vitrine pour détecter les étiquettes des produits. La deuxième détection comprend en outre une obtention, pour chaque produit détecté, d'une deuxième valeur de la caractéristique de la détection de l'étiquette du produit détecté.

En outre, après la détection de la fermeture de la porte DET_FER, on peut verrouiller la porte. Par exemple, la porte peut être verrouillée automatiquement après ouverture ou après l'expiration d'un délai prédéfini (typiquement quelques secondes) si la porte n'a pas été ouverte.

L'étape TT_SOR est ensuite mise en œuvre dans laquelle pour chaque produit détecté lors de la première détection et lors de la deuxième détection, un traitement de la première valeur et de la deuxième valeur de la caractéristique, le traitement utilisant un ou plusieurs paramètres prédéfinis pour déterminer si le produit a été sorti de ladite enceinte entre la première détection et la deuxième détection.

On obtient ainsi une liste des produits sortis lorsque l'utilisateur a ouvert la porte de la vitrine.

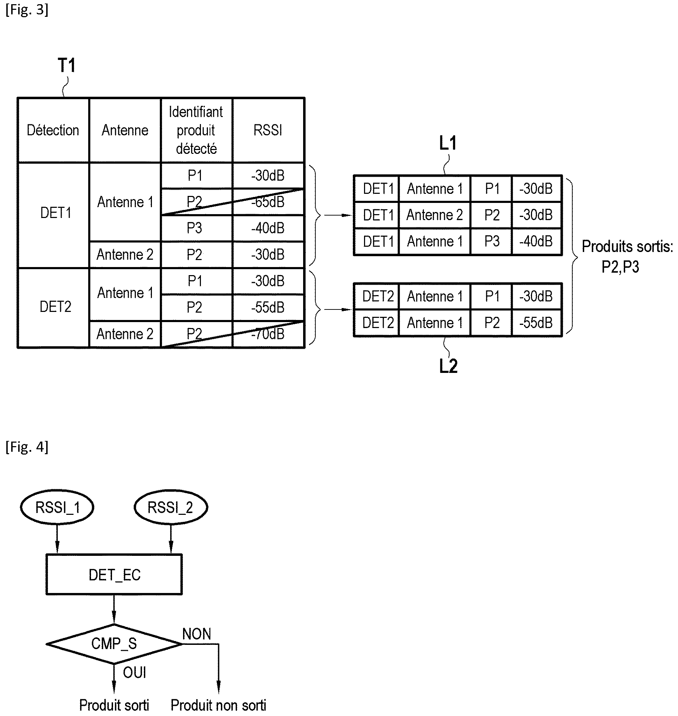

Sur la figure 3, on a représenté un tableau T1 qui illustre les détections des produits dans une vitrine équipée de deux antennes : antenne 1 et antenne 2.

Au cours de la première détection DET1, l'antenne 1 détecte trois produits ayant pour identifiants P1, P2 et P3 avec des valeurs de caractéristique qui sont ici des RSSI d'un signal émis par l'étiquette de chaque produit (la caractéristique et le RSSI d'un signal émis par l'étiquette).

L'antenne 2 détecte uniquement le produit P2 et le produit P2 est le seul produit détecté par plusieurs antennes. Pour ce produit, on va déterminer une valeur de la caractéristique à conserver à partir des valeurs obtenues par les antennes 1 et 2. Ici, ce traitement consiste en la détermination du RSSI le plus élevé. La valeur à conserver est donc celle obtenue par l'antenne 2 pour le produit P2.

Cela conduit à élaborer une liste L1 dans laquelle sont présents les produits détectés avec l'antenne qui les a détectés.

Au cours de la deuxième détection, on ne détecte que les produits P1 et P2, et les RSSI sont différents. En particulier, le produit P2 a été détecté par les antennes 1 et 2 avec des RSSI respectivement de -55dB et de -70dB.

La valeur à conserver est -55dB et on obtient la liste L2 de la figure. P3 n'apparait plus dans la liste des produits détectés.

Entre les détections DET1 et DET2, on note que pour le produit P2, le RSSI à conserver est passé de -30dB à -55dB ce qui correspond à un écart de 25dB.

Si un seuil fixé à 20dB est utilisé, ce seuil est dépassé et on considère que le produit P2 a été sorti entre les deux détections. Le produit P3, qui n'a été détecté par aucune antenne lors de la deuxième détection, est également considéré comme sorti.

On peut noter que les listes L1 et L2 indiquent les antennes qui ont détecté le mieux possible chaque produit, ce qui indique la position des produits dans la vitrine.

Sur la figure 4, on a représenté un traitement qui peut être mis en œuvre pendant l'étape TT_SOR décrite en référence à la figure 2.

Dans ce traitement, on met d'abord en œuvre une étape DET_EC de détermination d'un écart entre deux valeurs de caractéristiques, ici des valeurs RSSI notées RSSI_1 et RSSI_2, puis on met en œuvre une comparaison entre cet écart et un seuil (étape CMP_S). Si le seuil est dépassé alors le produit est considéré comme sorti, s'il ne l'est pas le produit est considéré comme non-sorti.

On notera que pour des types de produits différents tels que les produits 105A à 105C de la figure 1, on peut utiliser des seuils différents. Des étapes de calibration pourront être mises en œuvre pour trouver les seuils appropriés pour ces produits qui sont différents.

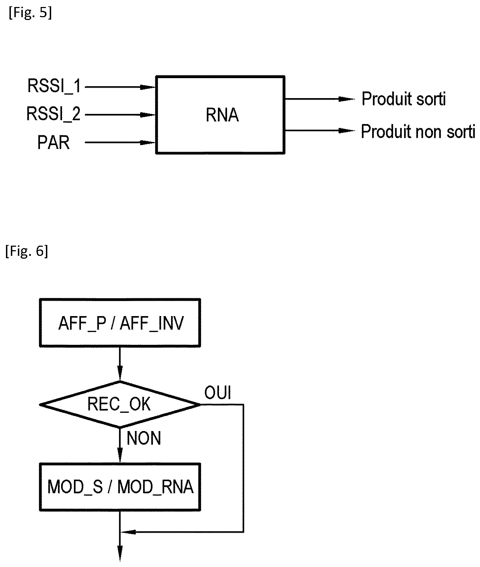

Sur la figure 5, on a représenté une alternative au mode de mise en œuvre décrit en référence à la figure 4.

Ici, on utilise un réseau de neurones artificiels RNA qui reçoit en entrée les valeurs RSSI notées RSSI_1 et RSSI_2 et aussi possiblement un ou plusieurs paramètres PAR, par exemple le nombre d'étiquettes détectées lors de la première ou lors de la deuxième détection.

Le réseau de neurones artificiels RNA délivre en sortie une indication selon laquelle le produit est sorti ou non sorti.

On notera que le réseau de neurones artificiels RNA peut être du type réseau de neurones récurrents (« Recurrent Neural Network » en langue anglaise).

Le réseau de neurones artificiels RNA de la figure 5 peut être entraîné en mettant en œuvre au moins les étapes qui vont être décrites en référence à la figure 6.

Sur la figure 6, on a décrit une première étape AFF_P ou AFF_INV dans laquelle soit on affiche une liste de produits sortis sur une interface humain-machine de la vitrine (cas AFF_P), soit on affiche un inventaire des produits détectés dans la vitrine (cas AFF_INV).

Cette affichage peut être lu par un utilisateur qui soit connait les produits effectivement sortis soit a réalisé manuellement un inventaire. L'utilisateur peut indiquer s'il est d'accord avec l'affichage sur un bouton de l'interface humain-machine. Si la vitrine reçoit une information de l'utilisateur indiquant que la liste affichée n'est pas correcte, on peut mettre en œuvre une étape MOD_S ou une étape MOD_RNA.

L'étape MOD_S comprend la modification de la valeur d'un seuil, si un seuil est utilisé comme illustré sur la figure 4.

Cette modification peut être automatique et peut consister en une augmentation d'une quantité prédéfinie ou d'une diminution d'une quantité prédéfinie. Par exemple, s'il est déterminé que trop de produits ont été considérés comme sortis (information qui peut être saisie par l'utilisateur), la valeur du seuil peut être augmentée. Si par contre il est déterminé que trop peu de produits ont été considérés comme sortis par erreur (information qui peut être saisie par l'utilisateur), la valeur du seuil peut être diminuée.

De manière alternative, on peut utiliser un réseau de neurones artificiels qui délivre la valeur de seuil et dont l'apprentissage peut se faire avec un utilisateur qui indique si trop ou pas assez de produits ont été sortis par erreur.

Enfin, l'étape MOD_RNA peut également consister en une modification, ou un apprentissage, d'un réseau de neurones artificiels. Cet apprentissage peut également être basé sur des informations saisies par un utilisateur qui indique si trop ou pas assez de produits ont été sortis par erreur.

Les modes de mise en œuvre et de réalisation décrits ci-avant permettent d'obtenir une gestion précise du contenu d'une vitrine. Cela permet de mettre en place un système de facturation des éléments retirés de la vitrine qui est davantage précis.

On notera que si une erreur de détection est détectée après la mise en œuvre d'une deuxième détection, au cours d'une détection supplémentaire ou de la prochaine première détection, cela rend possible de débiter ou créditer le compte du dernier utilisateur pour que le montant effectivement débité reflète bien les produits sortis.

En fait, si un changement dans l'inventaire apparaît entre deux détections supplémentaires, on peut également débiter ou créditer le compte de ce dernier utilisateur pour que le montant effectivement débité reflète bien les produits sortis.

## Revendications

1. Procédé de gestion du contenu d'une vitrine (100) de présentation de produits (105A, ..., 105C) équipés d'étiquettes RFID (106) placés dans une enceinte de la vitrine, la vitrine comprenant au moins une antenne (103A, ..., 103C) configurée pour détecter les étiquettes RFID des produits présents dans ladite enceinte et une porte (101) au moins partiellement transparente ou translucide et recouverte d'un film (102) filtrant les ondes électriques et/ou magnétiques, le procédé comprenant :
- avant que la porte ne soit ouverte, une première détection (DET1) des produits présents dans l'enceinte en utilisant ladite antenne pour détecter les étiquettes des produits, la première détection comprenant en outre une obtention, pour chaque produit détecté, d'une première valeur d'une caractéristique de la détection de l'étiquette du produit détecté,
- postérieurement à la première détection et après que la porte ait été fermée, une deuxième détection (DET2) des produits présents dans l'enceinte en utilisant ladite antenne pour détecter les étiquettes des produits, la deuxième détection comprenant en outre une obtention, pour chaque produit détecté, d'une deuxième valeur de la caractéristique de la détection de l'étiquette du produit détecté, et
- pour chaque produit détecté lors de la première détection et lors de la deuxième détection, un traitement (TT_SOR) de la première valeur et de la deuxième valeur de la caractéristique, le traitement utilisant un ou plusieurs paramètres prédéfinis pour déterminer si le produit a été sorti de ladite enceinte entre la première détection et la deuxième détection,
dans lequel le traitement comprend :
- une détermination de l'écart (DET_EC) entre la première valeur et la deuxième valeur de la caractéristique, et une comparaison (CMP_S) de l'écart à un seuil prédéfini, le produit étant considéré comme ayant été sorti de ladite enceinte entre la première détection et la deuxième détection si l'écart est supérieur au seuil prédéfini, ou
- l'utilisation d'un réseau de neurones artificiels (RNA) ayant pour entrées au moins la première et la deuxième valeur de la caractéristique ou la différence entre la première et la deuxième valeur de la caractéristique, et pour sortie un indicateur dont la valeur indique si le produit a été sorti de ladite enceinte entre la première détection et la deuxième détection ;
dans lequel si un produit n'est pas détecté lors de la deuxième détection alors il est considéré comme sorti.

2. Procédé selon la revendication 1, comprenant une étape d'ajustement du seuil (MOD_S).

3. Procédé selon la revendication 1 ou 2, dans lequel au moins deux types de produits sont placés dans ladite enceinte, et pour chaque type de produit on utilise un seuil différent.

4. Procédé selon la revendication 1, dans lequel l'interface entre la porte et l'intérieur de la vitrine est équipée d'un joint filtrant les ondes électriques et/ou magnétiques, le joint étant connecté à la masse électrique de la vitrine.

5. Procédé selon l'une quelconque des revendications 1 à 4, dans lequel la vitrine est équipée d'une pluralité d'antennes (103A, ..., 103C) configurées pour détecter les étiquettes RFID des produits présents dans ladite enceinte, la première détection et la deuxième détection comprenant :
- une détection, par chaque antenne de la pluralité d'antennes, des produits présents dans ladite enceinte,
- pour chaque produit détecté par plusieurs antennes de la pluralité d'antennes, on détermine une valeur de la caractéristique à conserver à partir de toutes les valeurs de la caractéristique obtenue pour le produit en appliquant un traitement prédéfini,
- une élaboration d'une liste de produits (L1, L2) détectés avec pour chaque produit détecté une valeur de la caractéristique à conserver ou, si le produit a été détecté par une unique antenne, la valeur de la caractéristique obtenue pour ce produit.

6. Procédé selon la revendication 5, dans lequel les antennes sont agencées à l'intérieur d'évidements formés dans des étagères de la vitrine.

7. Procédé selon la revendication 5 ou 6, dans lequel on élabore ladite liste de produits détectés avec un identifiant de l'antenne ayant obtenue la valeur de la caractéristique à conserver.

8. Procédé selon l'une quelconque des revendications 1 à 7, dans lequel la caractéristique de la détection de l'étiquette d'un produit détecté est choisie dans le groupe comprenant : le RSSI d'un signal émis par l'étiquette, une différence de phase du signal émis par l'étiquette, une variation de fréquence du signal émis par l'étiquette, un nombre de détections par l'antenne ayant détecté le produit, et un nombre d'antennes ayant détecté le produit.

9. Procédé selon l'une quelconque des revendications 1 à 8, dans lequel la première détection est mise en œuvre postérieurement à une authentification (AUTH) d'un utilisateur avec la vitrine et préalablement à une ouverture de la vitrine, et la deuxième détection est mise en œuvre postérieurement à la première fermeture de la vitrine qui suit ladite ouverture de la vitrine.

10. Procédé selon l'une quelconque des revendications 1 à 9, dans lequel on met en œuvre des détections supplémentaires (DET_SUPP) des produits présents dans l'enceinte en utilisant ladite antenne pour détecter les étiquettes des produits de manière régulière, chaque détection supplémentaire comprenant en outre une obtention, pour chaque produit détecté, d'une valeur supplémentaire de la caractéristique de la détection de l'étiquette du produit détecté.

11. Procédé selon la revendication 10, dans lequel si une détection supplémentaire a été mise en œuvre dans un délai inférieur à une durée prédéfinie, alors on considère que les produits détectés lors de cette détection supplémentaire sont les produits détectés lors de la première détection, et que pour chaque produit détecté lors de la détection supplémentaire, la valeur supplémentaire est la première valeur.

12. Vitrine de présentation de produits (105A, ...,105C) équipés d'étiquettes RFID (106), la vitrine comprenant une enceinte dans laquelle sont placés les produits, au moins une antenne (103A, ..., 103C) configurée pour détecter les étiquettes RFID des produits présents dans ladite enceinte, une porte (101) au moins partiellement transparente ou translucide et recouverte d'un film (102) filtrant les ondes électriques et/ou magnétiques, et un module de gestion du contenu (110) de la vitrine configuré pour mettre en œuvre les étapes suivantes :
- une première détection, avant que la porte ne soit ouverte, des produits présents dans l'enceinte en utilisant ladite antenne pour détecter les étiquettes des produits, la première détection comprenant en outre une obtention, pour chaque produit détecté, d'une première valeur d'une caractéristique de la détection de l'étiquette du produit détecté,
- postérieurement à la première détection et après que la porte ait été fermée, une deuxième détection des produits présents dans l'enceinte en utilisant ladite antenne pour détecter les étiquettes des produits, la deuxième détection comprenant en outre une obtention, pour chaque produit détecté, d'une deuxième valeur de la caractéristique de la détection de l'étiquette du produit détecté, et
- pour chaque produit détecté lors de la première détection et lors de la deuxième détection, un traitement de la première valeur et de la deuxième valeur de la caractéristique, le traitement utilisant un ou plusieurs paramètres prédéfinis pour déterminer si le produit a été sorti de ladite enceinte entre la première détection et la deuxième détection, dans lequel le traitement comprend :
- une détermination de l'écart (DET_EC) entre la première valeur et la deuxième valeur de la caractéristique, et une comparaison (CMP_S) de l'écart à un seuil prédéfini, le produit étant considéré comme ayant été sorti de ladite enceinte entre la première détection et la deuxième détection si l'écart est supérieur au seuil prédéfini, ou
- l'utilisation d'un réseau de neurones artificiels (RNA) ayant pour entrées au moins la première et la deuxième valeur de la caractéristique ou la différence entre la première et la deuxième valeur de la caractéristique, et pour sortie un indicateur dont la valeur indique si le produit a été sorti de ladite enceinte entre la première détection et la deuxième détection.

## Patentansprüche

1. Verwaltungsverfahren des Inhalts einer Vitrine (100) zur Ausstellung von Produkten (105A, ..., 105C), die mit RFID-Etiketten (106) ausgestattet sind, die in einem Gehäuse der Vitrine angeordnet sind, die Vitrine umfassend mindestens eine Antenne (103A, ..., 103C), die konfiguriert ist, um die RFID-Etiketten der in dem Gehäuse vorhandenen Produkte zu erfassen, und eine Tür (101), die mindestens teilweise transparent oder durchscheinend und mit einem Film (102) bedeckt ist, der elektrische und/oder magnetische Wellen filtert, das Verfahren umfassend:
- bevor die Tür geöffnet wird, ein erstes Erfassen (DET1) der in dem Gehäuse vorhandenen Produkte unter Verwendung der Antenne, um die Etiketten der Produkte zu erfassen, das erste Erfassen ferner umfassend ein Erlangen, für jedes erfasste Produkt, eines ersten Werts eines Merkmals der Erfassung des Etiketts des erfassten Produkts,
- nach dem ersten Erfassen und nachdem die Tür geschlossen wurde, ein zweites Erfassen (DET2) der in dem Gehäuse vorhandenen Produkte unter Verwendung der Antenne, um die Etiketten der Produkte zu erfassen, das zweite Erfassen ferner umfassend ein Erlangen, für jedes erfasste Produkt, eines zweiten Werts des Merkmals der Erfassung des Etiketts des erfassten Produkts, und
- für jedes Produkt, das bei dem ersten Erfassen und bei dem zweiten Erfassen erfasst wird, ein Verarbeiten (TT_SOR) des ersten Werts und des zweiten Werts des Merkmals, wobei das Verarbeiten einen oder mehrere vordefinierte Parameter verwendet, um zu bestimmen, ob das Produkt zwischen dem ersten Erfassen und dem zweiten Erfassen aus dem Gehäuse herausgenommen wurde, wobei das Verarbeiten Folgendes umfasst:
- ein Bestimmen der Abweichung (DET_EC) zwischen dem ersten Wert und dem zweiten Wert des Merkmals und einen Vergleich (CMP_S) der Abweichung mit einem vordefinierten Schwellenwert, wobei davon ausgegangen wird, dass das Produkt zwischen dem ersten Erfassen und dem zweiten Erfassen aus dem Gehäuse entnommen wurde, wenn die Abweichung größer ist als der vordefinierte Schwellenwert, oder
- das Verwenden eines künstlichen neuronalen Netzes (KNN), das als Eingänge mindestens den ersten und den zweiten Wert des Merkmals oder die Differenz zwischen dem ersten und dem zweiten Wert des Merkmals und als Ausgang einen Indikator aufweist, dessen Wert angibt, ob das Produkt zwischen dem ersten Erfassen und dem zweiten Erfassen aus dem Gehäuse entnommen wurde;
wobei, wenn ein Produkt bei dem zweiten Erfassen nicht erfasst wird, es als entnommen gilt.

2. Verfahren nach Anspruch 1, umfassend einen Anpassungsschritt des Schwellenwerts (MOD_S).

3. Verfahren nach Anspruch 1 oder 2, wobei mindestens zwei Arten von Produkten in dem Gehäuse platziert werden und für jede Art von Produkt ein anderer Schwellenwert verwendet wird.

4. Verfahren nach Anspruch 1, wobei die Schnittstelle zwischen der Tür und dem Inneren Vitrine mit einer Dichtung ausgestattet ist, die elektrische und/oder magnetische Wellen filtert, wobei die Dichtung mit der elektrischen Masse der Vitrine verbunden ist.

5. Verfahren nach einem der Ansprüche 1 bis 4, wobei die Vitrine mit einer Vielzahl von Antennen (103A, ..., 103C) ausgestattet ist, die konfiguriert sind, um die RFID-Etiketten der in dem Gehäuse vorhandenen Produkte zu erfassen, wobei das erste Erfassen und das zweite Erfassen Folgendes umfassen:
- ein Erfassen, durch jede der Vielzahl von Antennen, der Produkte, die in dem Gehäuse vorhanden sind,
- für jedes Produkt, das von mehreren der Vielzahl von Antennen erfasst wurde, Bestimmen eines Werts des zu erlangenden Merkmals aus allen Werten des Merkmals, die durch Anwenden einer vordefinierten Verarbeitung für das Produkt erlangt werden,
- ein Erstellen einer Liste von erfassten Produkten (L1, L2) mit einem Wert des zu erlangenden Merkmals für jedes erfasste Produkt oder, wenn das Produkt von einer einzigen Antenne erfasst wurde, dem Wert des für dieses Produkt erlangten Merkmals.

6. Verfahren nach Anspruch 5, wobei die Antennen innerhalb von Aussparungen angeordnet sind, die in den Regalen der Vitrine gebildet sind.

7. Verfahren nach Anspruch 5 oder 6, wobei die Liste der erfassten Produkte mit einer Kennung der Antenne erstellt wird, die den Wert des beizubehaltenden Merkmals erlangt hat.

8. Verfahren nach einem der Ansprüche 1 bis 7, wobei das Merkmal des Erfassens des Etiketts eines erfassten Produkts ausgewählt ist aus der Gruppe, umfassend: den RSSI eines von dem Etikett gesendeten Signals, eine Phasendifferenz des von dem Etikett gesendeten Signals, eine Frequenzänderung des von dem Etikett gesendeten Signals, eine Anzahl von Erfassungen durch die Antenne, die das Produkt erfasst hat, und eine Anzahl von Antennen, die das Produkt erfasst haben.

9. Verfahren nach einem der Ansprüche 1 bis 8, wobei das erste Erfassen nach einer Authentifizierung (AUTH) eines Benutzers mit der Vitrine und vor einem Öffnen der Vitrine implementiert wird und das zweite Erfassen nach dem ersten Schließen der Vitrine implementiert wird, das auf das Öffnen der Vitrine folgt.

10. Verfahren nach einem der Ansprüche 1 bis 9, wobei zusätzliche Erfassungen (DET_SUPP) der in dem Gehäuse vorhandenen Produkte implementiert werden, indem die Antenne verwendet wird, um die Etiketten der Produkte regelmäßig zu erfassen, wobei jedes zusätzliche Erfassen ferner für jedes erfasste Produkt ein Erlangen eines zusätzlichen Werts des Merkmals des Erfassens des Etiketts des erfassten Produkts umfasst.

11. Verfahren nach Anspruch 10, wobei, wenn ein zusätzliches Erfassen innerhalb einer Zeit, die kürzer als eine vordefinierte Zeit ist, durchgeführt wurde, dann angenommen wird, dass die Produkte, die bei diesem zusätzlichen Erfassen erfasst wurden, die Produkte sind, die bei dem ersten Erfassen erfasst wurden, und dass für jedes Produkt, das bei dem zusätzlichen Erfassen erfasst wurde, der zusätzliche Wert der erste Wert ist.

12. Ausstellungsvitrine für Produkte (105A, ...,105C), die mit RFID-Etiketten (106) ausgestattet sind, die Vitrine umfassend ein Gehäuse, in dem die Produkte platziert sind, mindestens eine Antenne (103A, ..., 103C), die konfiguriert ist, um die RFID-Etiketten der in dem Gehäuse vorhandenen Produkte zu erfassen, eine Tür (101), die zumindest teilweise transparent oder durchscheinend und mit einem Film (102) bedeckt ist, die elektrische und/oder magnetische Wellen filtert, und ein Verwaltungsmodul des Inhalts (110) der Vitrine, das konfiguriert ist, um die folgenden Schritte durchzuführen:
- ein erstes Erfassen, bevor die Tür geöffnet wird, der in dem Gehäuse vorhandenen Produkte unter Verwendung der Antenne, um die Etiketten der Produkte zu erfassen, das erste Erfassen ferner umfassend ein Erlangen, für jedes erfasste Produkt, eines ersten Werts eines Merkmals der Erfassung des Etiketts des erfassten Produkts,
- nach dem ersten Erfassen und nachdem die Tür geschlossen wurde, ein zweites Erfassen der in dem Gehäuse vorhandenen Produkte unter Verwendung der Antenne, um die Etiketten der Produkte zu erfassen, wobei das zweite Erfassen ferner ein Erlangen, für jedes erfasste Produkt, von Folgendem umfasst eines zweiten Werts des Merkmals der Erfassung des Etiketts des erfassten Produkts, und
- für jedes Produkt, das bei dem ersten Erfassen und bei dem zweiten Erfassen erfasst wird, ein Verarbeiten des ersten Werts und des zweiten Werts des Merkmals, wobei das Verarbeiten einen oder mehrere vordefinierte Parameter verwendet, um zu bestimmen, ob das Produkt zwischen dem ersten Erfassen und dem zweiten Erfassen aus dem Gehäuse herausgenommen wurde, wobei das Verarbeiten Folgendes umfasst:
- ein Bestimmen der Abweichung (DET_EC) zwischen dem ersten Wert und dem zweiten Wert des Merkmals und einen Vergleich (CMP_S) der Abweichung mit einem vordefinierten Schwellenwert, wobei davon ausgegangen wird, dass das Produkt zwischen dem ersten Erfassen und dem zweiten Erfassen aus dem Gehäuse entnommen wurde, wenn die Abweichung größer ist als der vordefinierte Schwellenwert, oder
- das Verwenden eines künstlichen neuronalen Netzes (KNN), das als Eingänge mindestens den ersten und den zweiten Wert des Merkmals oder die Differenz zwischen dem ersten und dem zweiten Wert des Merkmals und als Ausgang einen Indikator aufweist, dessen Wert angibt, ob das Produkt zwischen dem ersten Erfassen und dem zweiten Erfassen aus dem Gehäuse entnommen wurde.

## Claims

1. A method for managing the content of a display case (100) for presenting products (105A, ..., 105C) equipped with RFID tags (106) placed in an enclosure of the case, the case comprising at least one antenna (103A, ..., 103C) configured to detect the RFID tags of products present in said enclosure and a door (101) at least partially transparent or translucent and covered with a film (102) filtering electrical and/or magnetic waves, the method comprising:
- before the door is opened, a first detection (DET1) of products present in the enclosure using said antenna to detect the tags of the products, the first detection also comprising obtaining, for each detected product, a first value of a characteristic of the tag detection of the detected product,
- after the first detection and after the door has been closed, a second detection (DET2) of products present in the enclosure using said antenna to detect the tags of the products, the second detection also comprising obtaining, for each detected product, a second value of the characteristic of the tag detection of the detected product, and
- for each product detected during the first detection and during the second detection, a processing (TT_SOR) of the first value and the second value of the characteristic, the processing using one or more predefined parameters to determine if the product has been removed from said enclosure between the first detection and the second detection,
wherein the processing comprises:
- a determination of the difference (DET_EC) between the first value and the second value of the characteristic, and a comparison (CMP_S) of the difference to a predefined threshold, the product being considered to have been removed from said enclosure between the first detection and the second detection if the difference is greater than the predefined threshold, or
- the use of an artificial neural network (ANN) having as inputs at least the first and second value of the characteristic or the difference between the first and second value of the characteristic, and as output an indicator whose value indicates if the product has been removed from said enclosure between the first detection and the second detection;
wherein if a product is not detected during the second detection, it is considered removed.

2. The method according to claim 1, comprising a step of threshold adjustment (MOD_S).

3. The method according to claim 1 or 2, wherein at least two types of products are placed in said enclosure, and for each type of product, a different threshold is used.

4. The method according to claim 1, wherein the interface between the door and the inside of the case is equipped with a joint filtering electrical and/or magnetic waves, the joint being connected to the electrical ground of the case.

5. The method according to any one of claims 1 to 4, wherein the case is equipped with a plurality of antennas (103A, ..., 103C) configured to detect the RFID tags of products present in said enclosure, the first detection and the second detection comprising:
- a detection, by each antenna of the plurality of antennas, of products present in said enclosure,
- for each product detected by several antennas of the plurality of antennas, a value of the characteristic to be retained is determined from all the values of the characteristic obtained for the product by applying a predefined processing,
- a preparation of a list of detected products (L1, L2) with a value of the characteristic to be retained for each detected product or, if the product has been detected by a single antenna, the value of the characteristic obtained for this product.

6. The method according to claim 5, wherein the antennas are arranged inside recesses formed in the shelves of the case.

7. The method according to claim 5 or 6, wherein the list of detected products is prepared with an identifier of the antenna having obtained the value of the characteristic to be retained.

8. The method according to any one of claims 1 to 7, wherein the characteristic of the tag detection of the detected product is chosen from the group comprising: the RSSI of a signal emitted by the tag, a phase difference of the signal emitted by the tag, a frequency variation of the signal emitted by the tag, a number of detections by the antenna having detected the product, and a number of antennas having detected the product.

9. The method according to any one of claims 1 to 8, wherein the first detection is implemented after user authentication (AUTH) with the case and before opening the case, and the second detection is implemented after the first closure of the case following said opening of the case.

10. The method according to any one of claims 1 to 9, wherein additional detections (DET_SUPP) of products present in the enclosure are implemented using said antenna to detect the tags of the products regularly, each additional detection also comprising obtaining, for each detected product, an additional value of the tag detection characteristic of the detected product.

11. The method according to claim 10, wherein if an additional detection has been implemented within a time less than a predefined duration, then the products detected during this additional detection are considered the products detected during the first detection, and for each product detected during the additional detection, the additional value is the first value.

12. A product display case (105A, ..., 105C) equipped with RFID tags (106), the case comprising an enclosure wherein the products are placed, at least one antenna (103A, ..., 103C) configured to detect the RFID tags of products present in said enclosure, a door (101) at least partially transparent or translucent and covered with a film (102) filtering electrical and/or magnetic waves, and a content management module (110) of the case configured to implement the following steps:
- a first detection, before the door is opened, of products present in the enclosure using said antenna to detect the tags of the products, the first detection also comprising obtaining, for each detected product, a first value of a characteristic of the tag detection of the detected product,
- after the first detection and after the door has been closed, a second detection of products present in the enclosure using said antenna to detect the tags of the products, the second detection also comprising obtaining, for each detected product, a second value of the characteristic of the tag detection of the detected product, and
- for each product detected during the first detection and during the second detection, a processing of the first value and the second value of the characteristic, the processing using one or more predefined parameters to determine if the product has been removed from said enclosure between the first detection and the second detection,
wherein the processing comprises:
- a determination of the difference (DET_EC) between the first value and the second value of the characteristic, and a comparison (CMP_S) of the difference to a predefined threshold, the product being considered to have been removed from said enclosure between the first detection and the second detection if the difference is greater than the predefined threshold, or
- the use of an artificial neural network (ANN) having as inputs at least the first and second value of the characteristic or the difference between the first and second value of the characteristic, and as output an indicator whose value indicates if the product has been removed from said enclosure between the first detection and the second detection.
